# EUROPEAN PATENT SPECIFICATION

(11) **EP 4 282 720 B1**
(45) Date of publication and mention of the grant of the patent: **16.07.2025**
(21) Application number: 23175641.2
(22) Date of filing: 26.05.2023
(51) Int. Cl.: B60T 13/22, B60T 13/40, B60T 17/22, F16D 66/00, F16D 66/02, G01D 15/12, G01D 15/14

(54) **BRAKE ACTUATORS AND SYSTEMS FOR MONITORING STROKE OF BRAKE ACTUATORS**
BREMSAKTUATOREN UND SYSTEME ZUR ÜBERWACHUNG DES HUBS VON BREMSAKTUATOREN
ACTIONNEURS DE FREIN ET SYSTÈMES DE SURVEILLANCE DE COURSE D'ACTIONNEURS DE FREIN

(30) Priority: 26.05.2022 US 202263346188 P; 25.05.2023 US 202318323515
(43) Date of publication of application: 29.11.2023
(73) Proprietor: TSE Brakes, Inc., Cullman, AL 35055 (US)
(72) Inventor: Gregoire, Jean, Cullman, AL 35057 (US); Drake, Will Brandon, Cullman, AL 35058 (US)
(74) Representative: Håmsø Patentbyrå AS

(56) References cited:
- CA-A1- 2 520 747
- DE-A1- 4 409 351
- US-A- 5 825 287
- US-A1- 2003 214 396
- US-A1- 2003 222 774
- US-B1- 6 255 941
- US-B1- 6 352 137
- US-B1- 6 501 375
- US-B1- 6 888 451

## Description

### CROSS-REFERENCE TO RELATED APPLICATION

The present disclosure is based on and claims priority to U.S. Provisional Patent Application No. 63/346,188 filed May 26, 2022 and U.S. Patent Application No. 18/323,515 filed on May 25, 2023.

### FIELD

The present disclosure relates to vehicle braking systems, including but not limited to pneumatically-operated spring brake actuators having a push rod that engages a wheel brake.

### BACKGROUND

The following U.S. Patents and U.S. Patent Application Publication disclose relevant background information.

U.S. Patent No. 10,913,439 discloses one example of a conventional spring-brake actuator. The spring-brake actuator has a push rod assembly with a base located in a service brake chamber and a push rod extending from a service brake chamber. Pneumatic activation of the spring-brake actuator causes the push rod to further extend out of the service brake chamber to thereby engage a wheel brake with a wheel of the vehicle. Pneumatic deactivation of the spring-brake actuator causes the push rod to retract back into the service brake chamber to thereby disengage the wheel brake from the wheel of the vehicle.

U.S. Patent No. 11,130,482 discloses a brake chamber having a chamber housing having an end, a push rod configured for reciprocal movement in the chamber housing in a first direction and a second direction over a stroke distance, a return spring disposed in the chamber housing configured to urge the push rod in the second direction and a sensor assembly having a sensor and a magnet movable relative to the sensor with movement of the push rod. The sensor is configured to detect a magnetic field strength of the magnet and output sensor data representative of the detected magnetic field strength. The sensor assembly is configured to determine a position of the push rod based on the sensor data over the entire stroke distance

U.S. Patent No. 11,639,166 discloses a spring brake actuator for applying a brake of a vehicle having a housing containing a diaphragm that separates the housing into first and second chambers. A clutch actuator device is for selectively compressing a compression spring such that the spring brake actuator is operable in a plurality of states including a parking state, driving state, and a braking state.

U.S. Patent Publication No. 2018/0281767 discloses a spring brake actuator. The spring brake actuator has a push rod assembly with a base located in a service brake chamber and a push rod extending from a service brake chamber. Pneumatic activation of the spring brake actuator causes the push rod to further extend out of the service brake chamber to thereby engage a wheel brake with a wheel of the vehicle. Pneumatic deactivation of the spring brake actuator causes the push rod to retract back into the service brake chamber to thereby disengage the wheel brake from the wheel of the vehicle.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

In certain examples, a system for monitoring stroke of a spring brake actuator of a vehicle comprises a spring brake actuator having a push rod, wherein pneumatic activation of the spring brake actuator causes the push rod to further extend out of the spring brake actuator to thereby activate braking of the vehicle, and wherein pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense changes in a magnetic field created by the first magnet and the second magnet, and a controller is configured to determine stroke of the push rod based upon the changes in magnetic field.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and further comprising a shroud that rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a spring brake actuator for braking a wheel of a vehicle comprises a first chamber, a second chamber, and a push rod extending from the second chamber, wherein pneumatic activation of the spring brake actuator causes the push rod to further extend out of the second chamber to thereby activate braking of the wheel of the vehicle, and wherein pneumatic deactivation of the spring brake actuator causes the push rod to retract back into the second chamber to thereby deactivate braking of the wheel of the vehicle. A first magnet is coupled to the push rod and a second magnet is also coupled to the push rod, the second magnet being spaced apart from the first magnet. A sensor is configured to sense changes in a magnetic field created by the first magnet and the second magnet. A controller is configured to determine stroke of the push rod based on changes in magnetic field.

Optionally, the first magnet is fixed relative to the second magnet such that as the push rod moves, distance between the first magnet and the second magnet remains constant. Optionally, the spring brake actuator has a chamber from which the push rod extends, and wherein the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the comprises a ferromagnetic material. Optionally, the sleeve has a lip and a shroud rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a system for monitoring stroke of a spring brake actuator of a vehicle includes a spring brake actuator having a push rod such that pneumatic activation of the spring brake actuator causes the push rod to further extend out of the spring brake actuator to thereby activate braking of the vehicle and pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense a magnetic field created by the first magnet and the second magnet, and a controller is configured to determine stroke of the push rod based upon the magnetic field.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and further comprising a shroud that rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a system for monitoring stroke of a spring brake actuator of a vehicle includes a spring brake actuator having a push rod such that pneumatic activation of the spring brake actuator causes the push rod to further extend out of the spring brake actuator to thereby activate braking of the vehicle and pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense a magnetic field created by the first magnet and the second magnet, and a controller configured to determine stroke of the push rod based upon the magnetic field.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and further comprising a shroud that rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, spring brake actuator for braking a wheel of a vehicle includes a first chamber, a second chamber, and a push rod extending from the second chamber such that pneumatic activation of the spring brake actuator causes the push rod to further extend out of the second chamber to thereby activate braking of the wheel of the vehicle and pneumatic deactivation of the spring brake actuator causes the push rod to retract back into the second chamber to thereby deactivate braking of the wheel of the vehicle. A first magnet is coupled to the push rod, a second magnet coupled to the push rod, and the second magnet is spaced apart from the first magnet. A sensor configured to sense a magnetic field created by the first magnet and the second magnet, and a controller configured to determine stroke of the push rod based on the magnetic field.

Optionally, the first magnet is fixed relative to the second magnet such that as the push rod moves, distance between the first magnet and the second magnet remains constant. Optionally, the spring brake actuator has a chamber from which the push rod extends, and wherein the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the comprises a ferromagnetic material. Optionally, the sleeve has a lip and a shroud rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a method for monitoring stroke of a spring brake actuator includes coupling a first magnet and a second magnet to a push rod of the spring brake actuator; actuating the spring brake actuator to thereby move the push rod; sensing magnetic field created by the first magnet and the second magnet as the push rod is moved; and determining stroke of the push rod.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the coupling the second magnet to the push rod includes using a sleeve to couple the second magnet to the push rod. Optionally, the sleeve comprises a ferromagnetic material. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a cross-sectional view of an example spring brake actuator according to the present disclosure in a driving state.
Figs. 2-6 are cross-sectional views of the example spring brake actuator of Fig. 1 in various braking states.
Fig. 7 is a cross-sectional view of an example adapter according to the present disclosure.
Figs. 8-10 are schematic views of example field-stroke curves.
Fig. 11 is a schematic diagram of an example control system of the marine drive according to the present disclosure.
Fig. 12 is an example control method according to the present disclosure.

### DETAILED DESCRIPTION

Heavy trucks, trailers, and other commercial vehicles typically use brake systems including pneumatically-operated spring brake actuators which provide the braking forces necessary to stop the vehicle. Such a system typically includes a brake pedal positioned on the floor of the driver's cab or compartment of the vehicle which, upon activation, causes pressurized air from an air reservoir to enter an air chamber of the spring brake actuator. The spring brake actuator features a push rod which is caused to extend out of the air chamber to activate a wheel brake having brake shoes with a brake lining material that is pressed against a brake drum at the vehicle wheel-end. The wheel brake often includes a slack adjustor which turns a cam roller via a camshaft to force the brake shoes to engage the brake drum to stop the vehicle. Releasing the pressurized air from the air chamber allows a spring within the air chamber to retract the push rod back to its original position. See above-referenced U.S. Patent No. 10,913,439 for an example conventional spring brake actuator.

The present inventors have observed that the output force generated by a spring brake actuator, such as the spring brake actuator disclosed in U.S. Patent No. 10, 913, 439, can be non-linear throughout the range of motion and decreases near the full-stroke limit. Federal regulations define the maximum stroke that can be used during vehicle operations as a subset of the full range of stroke as manufactured. If brake actuator push rod movement exceeds the specified limit during inspection, the brakes are considered to be out of adjustment.

In an attempt to resolve these problems, automatic slack adjusters have been required for new trucks and tractors since 1994 and for new trailers since 1995; however, brake adjustment violations continue to rank among the top five vehicle out-of-service violations in the United States. In addition to on-going mitigation efforts, improved means of detection are viewed as an important component in addressing this wide-spread safety concern.

Some conventional stroke monitoring systems, such as the systems disclosed in above-referenced U.S. Patent No. 11,130,482, utilize a single magnet and/or one or more sensors to determine brake stroke at fixed, predetermined positions-one of these positions frequently being the "out of adjustment" or "overstroke" position. One of the disadvantages of this approach is that it is not possible to determine brake stroke outside of the fixed positions. Other systems rely on vision-based means to determine stroke, such as U.S. Patent Nos. 8,616,342 and 9,855,940, but these may be susceptible to environmental contamination in over-the-road and off-road commercial vehicle applications and require special design considerations for maintaining operating conditions within the sensed area.

Accordingly, the present inventors endeavored to develop systems of the present disclosure (described herein below) that are improved systems over the prior art and resolve one or more of the disadvantages noted above.

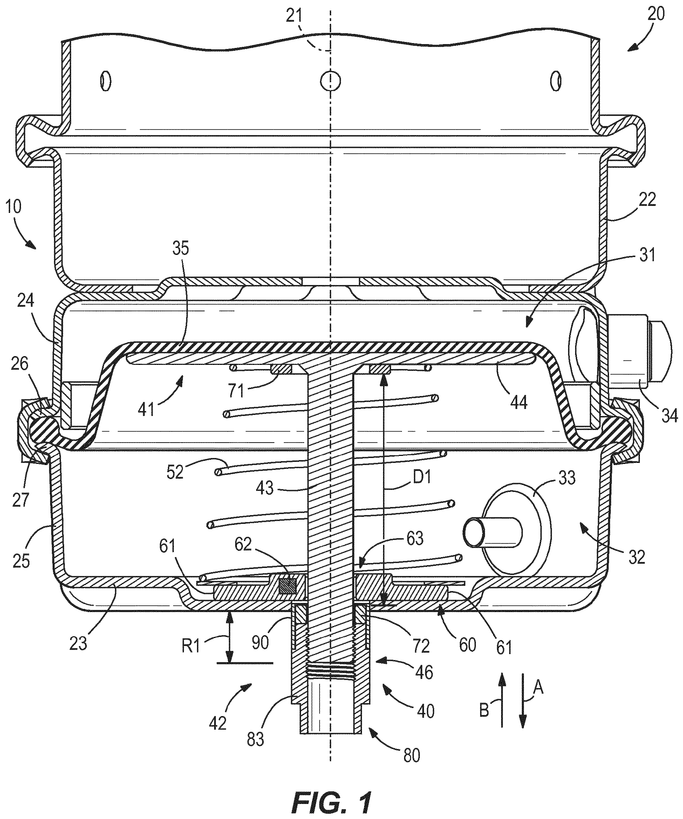

Fig. 1 depicts an example system 10 of the present disclosure. The system 10 includes a spring brake actuator 20 for applying a wheel brake of a vehicle. The spring brake actuator 20 extends along a center axis 21 and has an axially elongated housing 22. The housing 22 includes opposing cup-shaped end housing portions, namely a first housing portion 24 and a second housing portion 25. The first and second housing portions 24, 25 have perimeter flanges 26, 27 respectively, that engage each other in a sealing relationship. The housing 22 defines a first chamber 31 and a second chamber 32. The first chamber 31 is separated from the second chamber 32 by a flexible diaphragm 35. The perimeter of the diaphragm 35 is held and compressed by the perimeter flanges 26, 27. A port 34 formed through the first housing portion 24 is configured to admit and release compressed air to and from the first chamber 31. The pressurized air can be provided by a conventional source of pressurized air located on the vehicle. A port 33 formed through the second housing portion 25 is configured to admit and release air to and from the second chamber 32.

A push rod 40 has a first end portion 41 abutting the diaphragm 35 and an opposite, second end portion 42 extending out of second chamber 32. The second end portion 42 is pivotably coupled to a lever arm of a conventional slack adjuster or cam roller (not shown). The slack adjuster and/or cam roller is configured to translate the reciprocal movement of the push rod 40 to a wheel brake for the vehicle. The push rod 40 has a rod 43 located in the second chamber 32 and extending through a hole in an end wall 23 of the second housing portion 25. The push rod 40 also includes an end flange 44 that abuts the diaphragm 35 such that as the diaphragm 35 flexes back and forth in the housing 22, the rod 43 reciprocates out of and back into the second chamber 32.

A return spring 52 is located in the second chamber 32 and is compressed between the end wall 23 of the second housing portion 25 and the end flange 44 to thereby bias the rod 43 into the second chamber 32 and oppose movement of the rod 43 out of the second chamber 32. In certain examples, a flexible bellows (not depicted) is coupled to the end wall 23 of the second housing portion 25 and covers the return spring 52 and the rod 43.

A sensor assembly 60 is in the second chamber 32. The sensor assembly 60 is directly or indirectly coupled to the end wall 23 of the second chamber 32. The sensor assembly 60 includes a housing 61 in which one or more sensors 62 (described further herein) are positioned. The housing 61 protects the sensor 62 from debris and damage. In the example depicted in Fig. 1, the push rod 43 slidably extends through a hole 63 defined by the sensor assembly 60. The sensor housing 61 may be formed of plastic or other similar, suitable material. In certain examples, the sensor assembly 60 includes a printed circuit board ("PCB"), to which the sensor 62 is operably connected. In this example, the PCB includes a memory system, a processing system, such as a microprocessor, and a communication system.

The sensor 62 is configured to sense one or more magnetic characteristics (e.g., magnetic field, magnetic field strength) of one or more magnets 71, 72 (described further herein) and output sensor data corresponding to the sensed magnetic characteristics. In one example, the sensor 62 senses a magnetic field strength and outputs sensor data corresponding to a value of the detected magnetic field strength. The sensor 62 can be any suitable sensor capable of sensing magnetic characteristics, and in one example, the sensor 62 is a Hall-Effect sensor. An example of a commercially available Hall-Effect sensor is part number Si7210 manufactured by Silicon Labs, and another commercially available Hall-Effect sensor is part number TLV493 manufactured by Infineon. Note in certain examples, the sensor 62 is configured to also sense temperature of or near the spring brake actuator 20. In other examples, the sensor assembly 60 includes a separate temperature sensor for sensing temperature of or near the spring brake actuator 20.

The spring brake actuator 20 includes a first magnet 71 directly or indirectly coupled to the end flange 44 of the push rod 40. The first magnet 71 faces the sensor assembly 60 and moves with the end flange 44 as the rod 43 reciprocates into and out of the second chamber 32, as noted above. In one example, the first magnet 71 is embedded in the end flange 44. In another example, the first magnet 71 is disposed on an upper or lower surface of the end flange 44.

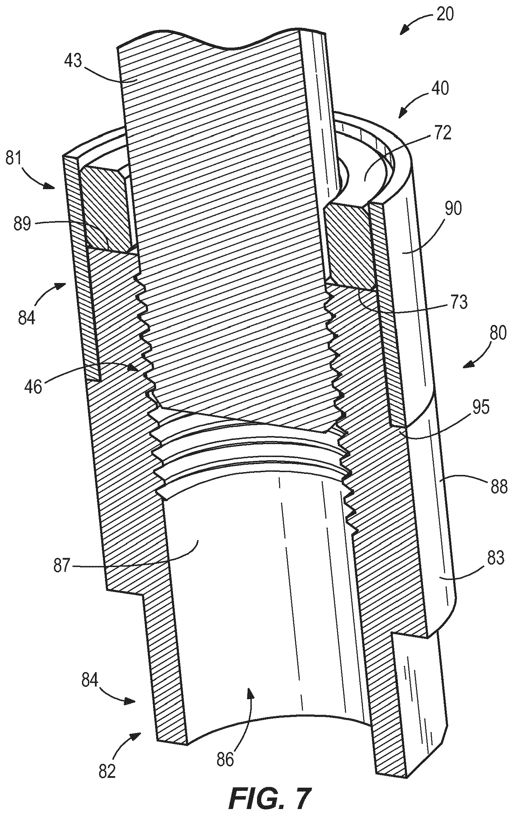

The strength of the magnetic field detected by the sensor 62 varies based on a distance between the first magnet 71 and the sensor 62. For instance, the detected magnetic field strength is weaker when the first magnet 71 is positioned farther from the sensor 62 and stronger when the first magnet 71 is positioned nearer to the sensor 62. Thus, the detected magnetic field from the first magnet 71 is weakest when the rod 43 is at a 'zero stroke position' at start portion of a fore stroke (e.g., the fore stroke is movement of the rod 43 out of the second chamber 32) which corresponds to an end position of the return stroke (e.g., the return stroke is movement of the rod 43 into the second chamber 32). The zero stroke position also corresponds to the position of the rod 43 when the spring brake actuator 20 is in a driving state (described hereinbelow). In contrast, the sensed magnetic field of the first magnet 71 is strongest when the rod 43 is at an end position of the fore stroke, which corresponds to a start position of the return stroke, when the spring brake actuator 20 is in a braking state (described herein below, see Fig. 7), and applying a maximum braking force on the vehicle. Note that the sensor 62 may detect the strength of the magnetic field at any desired time interval or in response to a known position of the rod 43, the end flange 44, and the first magnet 71. For example, the sensor 62 may continuously sense the magnetic field strength during operation of the spring brake actuator 20.

The present inventors observed that conventional system for monitoring stroke of spring brake actuators using a single magnet have shortcomings in sensing changes in magnetic fields as spring brake actuators are actuated. For example, the present inventor recognized that sensors, such as Hall-effect sensors are constructed to provide magnetic field strength readings to a specified sensitivity within a defined range. As such, when relative motion between the sensor and a single magnet occurs, a field-stroke curve based on the sensed magnetic field strength relative to stroke of the push rod is relatively flat when the distance between the magnet and the sensor is large or increases.

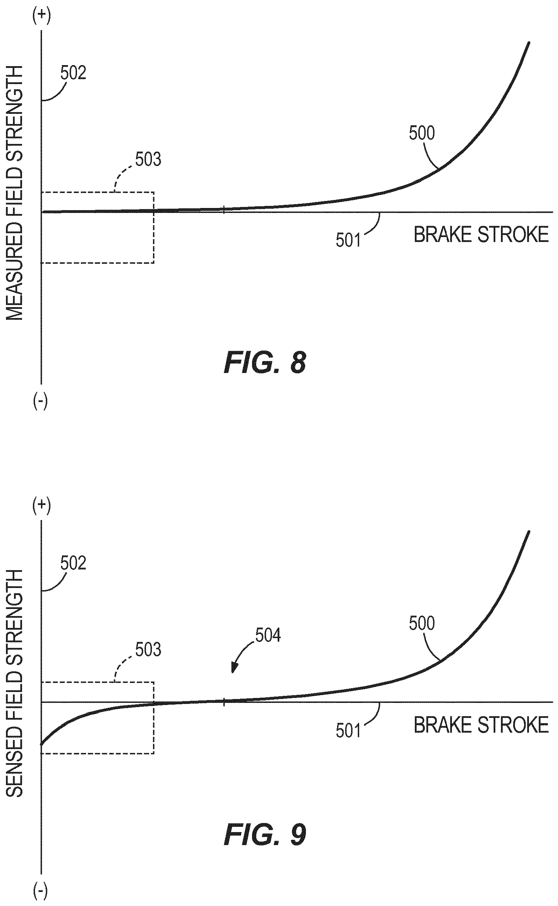

Referring to Fig. 8, an example field-stroke curve 500 is depicted of a conventional single-magnet system. Note that the brake stroke axis 501 corresponds to stroke or distance moved by the push rod, and the sensed field strength axis 502 corresponds to the sensed magnetic field strength. In this example, the sensor is located on the end wall of the spring brake actuator and the magnet is coupled to the end flange of the push rod. As the push rod begins the fore stroke, the distance between the sensor and the single magnet is sufficiently large such that sensor does not sense or minimally senses magnetic field strength changes. This observation can be attributed to the sensitivity, or lack thereof, of the sensor, i.e. the sensor lacks the sensitivity to detect changes in magnetic field strength as the magnet moves with the push rod and thereby cannot distinguish stroke changes as the push rod moves. As such, the field-stroke curve 500 is sufficiently flat during the beginning of the fore stroke (see zone 503 which schematically depicts the beginning of the fore stroke; e.g., the beginning of the fore stroke may correspond with the first 30.0 mm of movement of the push rod) due to the lack the sensitivity of the sensor. Accordingly, the measurements of the stroke logged by the system may not accurately determine distinct stroke positions and/or stroke distance from the zero stroke position during the beginning of the fore stroke. Note that the sensor may accurately determine distinct stroke positions later in the fore stroke (schematically depicted by the field-stroke curve 500 outside of the zone 503) as the distance between the magnet and the sensor decreases. Also, note that the description relative to the beginning of the fore stroke is also true regarding the end of the return stroke.

In one example sequence of the fore stroke of the push rod, the sensor may sense the magnetic field strength to be a value of 0.309 millitesla (mT) when the push rod is at the zero stroke position. As the push rod is moved along the fore stroke, the sensor senses: (1) the magnetic field strength to be a value of 0.311 mT at a stroke of 1.0mm; (2) the magnetic field strength to be a value of 0.321 mT at a stroke of 2.0mm; (3) the magnetic field strength to be a value of 0.334 mT at a stroke of 3.0mm; (4) the magnetic field strength to be a value of 0.346 mT at a stroke of 4.0mm; and (5) the magnetic field strength to be a value of 0.361 mT at a stroke of 5.0mm. As such, actual stroke and movement of the magnet may not be accurately determined by the sensor during the beginning of the fore stroke (see zone 503 on Fig. 8).

In addition, external perturbations (e.g., interference from other metallic or magnet components of the spring brake actuator or vehicle) may induce 'noise' in the magnetic field and/or mechanical movement of components of the system may cause the magnet to become misaligned relative to original calibrated positions. This 'noise' can decrease accuracy in sensing the magnetic field strength at the beginning of the fore stroke. Note that as the distance between the magnet and the sensor increases, the 'sensed magnetic field strength'-to-noise ratio increases and thus accuracy increases.

For these reasons, the present inventors endeavored to develop improved systems that can accurately determine distinct stroke positions the push rod during the beginning of the fore stroke and end of the return stroke and/or distances between stroke positions.

During research and development, the present inventors realized that certain seemingly obvious or simple solutions do not achieve the improved systems the present inventors desired to develop. For example, the constrained geometry of the spring brake actuator (without making major modifications thereto) does not permit simple increases to the size and/or shape of the single magnet to achieve increased magnetic field strength and/or variances the magnetic field strength throughout the range of stroke. This is due to physical envelope limitations within the spring brake actuator and component cost constraints that limit the size and shape of the magnet that can be used. For instance, it may not be physically or economically feasible to provide a sufficiently large magnet to create the required field variation across the full range of stroke. For example, increasing the diameter of the magnet would interfere with the return spring and increasing the thickness of the magnet would prevent full stroke as the magnet would contact the sensor of the end wall. Furthermore, there is often a trade-off between maximizing sensor sensitivity and maximizing sensor range. When sensitivity is maximized to resolve minute differences in the magnetic field, the sensor becomes more vulnerable to over-saturation as the magnet approaches the sensor because range has been sacrificed for sensitivity. This problem may be compounded by using a larger magnet.

As such, the present inventors endeavored to develop the systems 10 of the present disclosure that have more than one magnets to thereby advantageously address shortcomings in sensing changes in magnetic fields over distances as encountered with conventional single-magnet systems, increase accuracy of sensing changing magnetic fields, and/or provide additional improvements which maximize the ability to sense the magnetic field.

Referring back to Fig. 1, the system 10 of the present disclosure further includes a second magnet 72 directly or indirectly coupled to the rod 43 such that the combined magnetic field strength of the magnets 71, 72 is sensed by the sensor 62 as the rod 43 reciprocates into and out the second chamber 32 (as described above). The system 10 of the present disclosure is capable of more accurately determining the distinct stroke positions during stroke of the rod 43 including the during the beginning of the fore stroke and the end of the return stroke. That is, the systems 10 of the present disclosure have greater resolution of the magnetic field strength of the magnets 71, 72 sensed by the sensor 62 during the stroke of the rod 43, relative to conventional single-magnet systems.

The second magnet 72 is coupled to a rod end 46 of the rod 43. In the non-limiting example depicted in Fig. 1, the push rod 40 has an adapter 80 that couples the second magnet 72 to the rod end 46. The adapter 80 is described in greater detail herein below. As noted above, the first magnet 71 is located on the end flange 44 and thus, the magnets 71, 72 are on opposite sides of the sensor 62. The magnets 71, 72 are fixed relative to each other such that as the rod 43 reciprocates, the distance D1 between the magnets remains constant. Note that in other examples, the second magnet 72 is positioned between the sensor assembly 60 and the end wall 23 or between the sensor assembly 60 and the first magnet 71. In certain examples, the second magnet 72 is orientated into alignment with the magnetic origination of the first magnet 71 such that opposite poles of magnets 71, 72 are oriented toward each other. For instance, the north pole of the second magnet is oriented toward the south pole of the first magnet 71.

Like the first magnet 71, as described above, strength of the magnetic field of the of the second magnet 72 weaker when the second magnet 72 is positioned farther from the sensor 62 and stronger when the second magnet 72 is positioned nearer to the sensor 62. Thus, the detected magnetic field of the second magnet 72 alone is strongest when the rod 43 is at a 'zero stroke position' at start portion of a fore stroke (e.g., the fore stroke is movement of the rod 43 out of the second chamber 32) which corresponds to an end position of the return stroke (e.g., the return stroke is movement of the rod 43 into the second chamber 32). However, the system 10 of the present disclosure includes both the first magnet 71 and the second magnet 72 such that the overlapping or collective magnetic field and/or magnetic field strength is unique and different than that only one of the magnets 71, 72 alone.

The present inventors discovered that including the second magnet 72 with the first magnet 71 advantageously changes the magnetic field strength sensed by the sensor 62 such that the system 10 can more accurately determine distinct stroke positions of the push rod 40. The magnetic fields of the magnets 71, 72 are superimposed onto each other, and the sensor 62 senses the magnetic field strength of the magnets 71, 72. As will be described in greater detail herein below, as the rod 43 reciprocates the sensor 62 senses a different magnetic field strength as the positions of the magnets 71, 72, which are positionally fixed relative to each other, changes relative to the sensor 62. In certain examples, as the rod 43 and the magnets 71, 72 axially translate, the magnetic field of the magnets 71, 72 also axially translates.

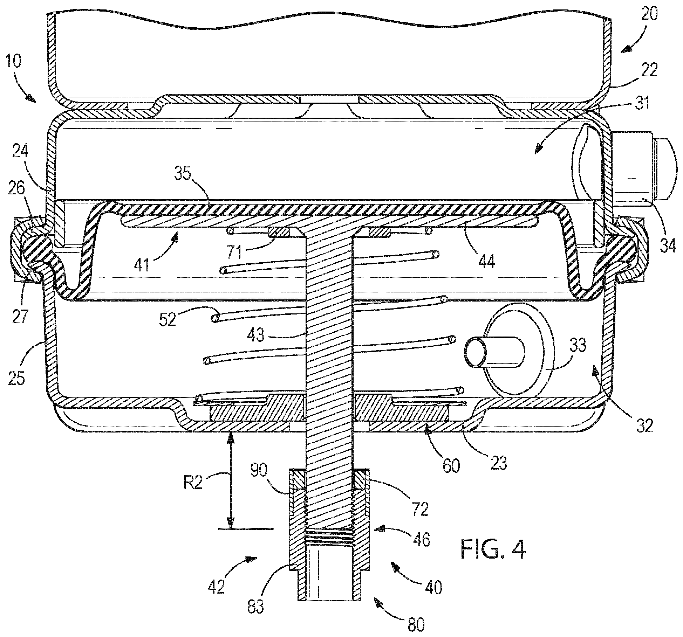

Figs. 1-6 depict the spring brake actuator 20 in various operational states. Fig. 1 depicts the spring brake actuator 20 in driving state in which the vehicle may be driven, by releasing the parking brake (e.g., manually release of a lever). Releasing the parking brake causes pressurized air to flow from the first chamber 31 via the port 34 into the second chamber 32 such that the air pressure in the first chamber 31 decreases and thereby causing the return spring 52 to retract the rod 43 in a first direction (see arrow A) into the second chamber 32 . Thus, no braking forces are applied to the wheels of the vehicle (e.g., the wheel brakes are not applied) and rod 43 is at the zero stroke position. Note that the rod end 46 extend a first distance R1 from housing 22.

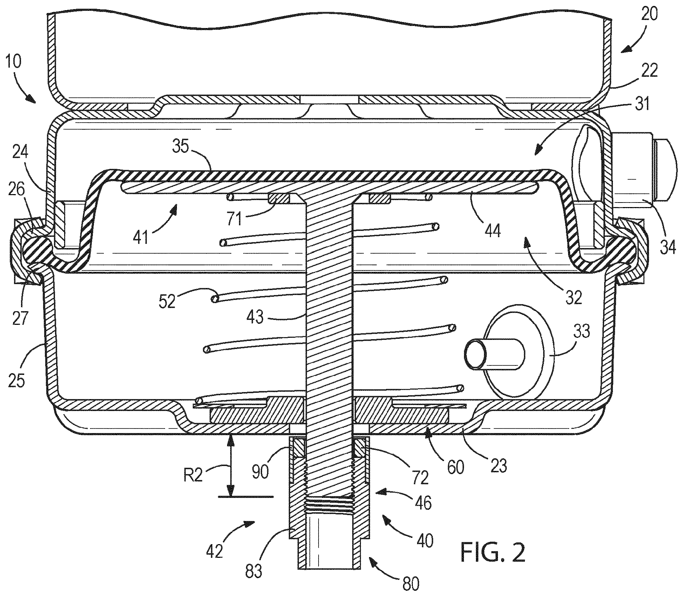

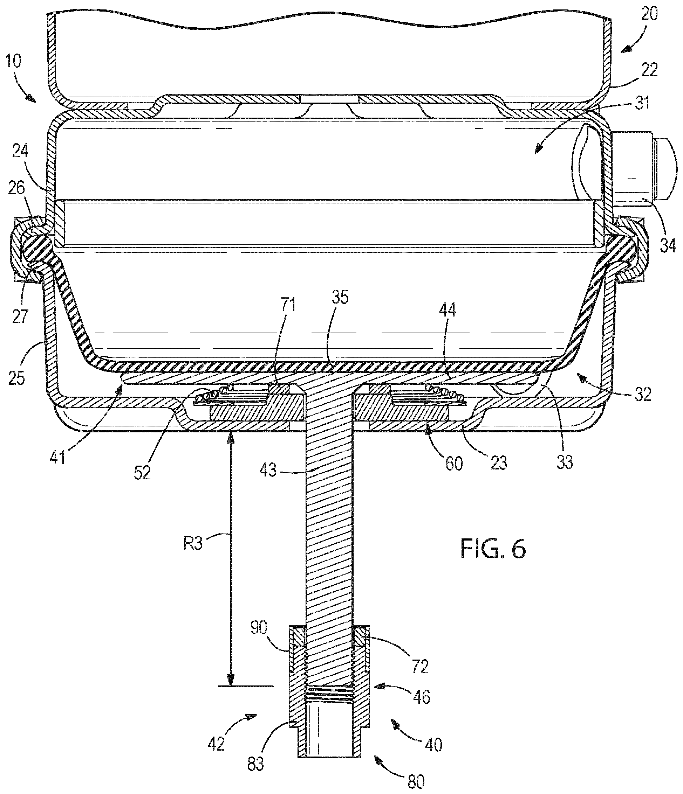

Fig. 2-6 depicts the spring brake actuator 20 in several different braking states as the operator depresses a brake pedal (not depicted) to thereby apply the wheel brake to slow or stop the vehicle. When depressing the brake pedal, pressurized air is provided via the port 34 to the first chamber 31 such that the air pressure in the first chamber 31 moves the diaphragm 35 is the second direction (arrow B) against the bias of the return spring 52. As such, the rod 43 moves in the second direction (arrow B) out of the second chamber 32 such that the distance between the rod end 46 and the housing 22 increases to a second distance R2 (Fig. 2) and thereby causing the wheel brakes to be applied. The second distance R2 is greater than the first distance R1 (Fig. 1), and Figs. 2-6 sequentially depict the second distance R2 between the rod end 46 and the housing 22 increasing as the brake pedal is depressed further causing the spring brake actuator 20 to further actuate and further extend the rod 43 in the second direction (arrow B). Fig. 6 depicts the between the rod end 46 and the housing 22 at a maximum third distance R3 that is greater than the second distance R2. Note that in the example depicted on Fig. 6 the first magnet 71 contacts the sensor assembly 60 such that rod 43 stops moving in the first direction (arrow A). In other examples, bolts (not depicted) used to secure the spring brake actuator 20 in place on the vehicle extend into the chamber 32 and thereby prevent excessive movement of the push rod 40 in the first direction (arrow A) such that when the push rod 40 contacts the bolts there is a 'space' between the sensor assembly 60 and the first magnet 71 and these components do not damage each other. When the operator releases the brake pedal, the pressurized air in the second chamber 32 is released or exhausted and the spring brake actuator 20 returns to the driving state noted above (Fig. 1).

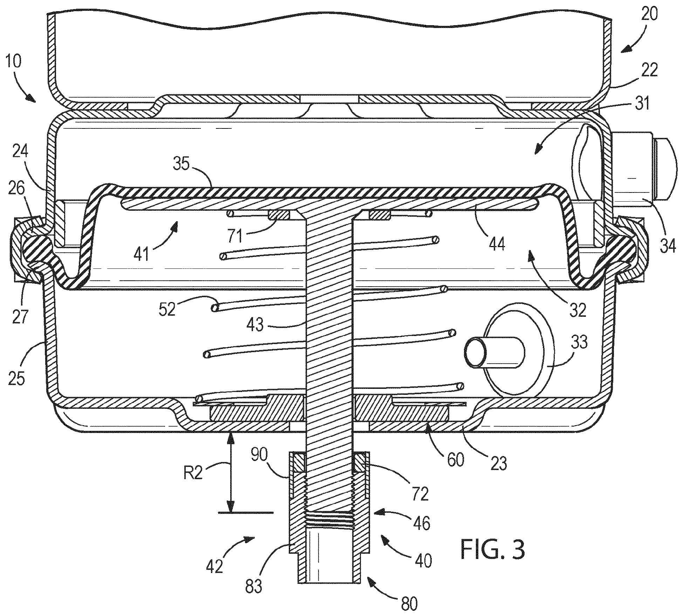

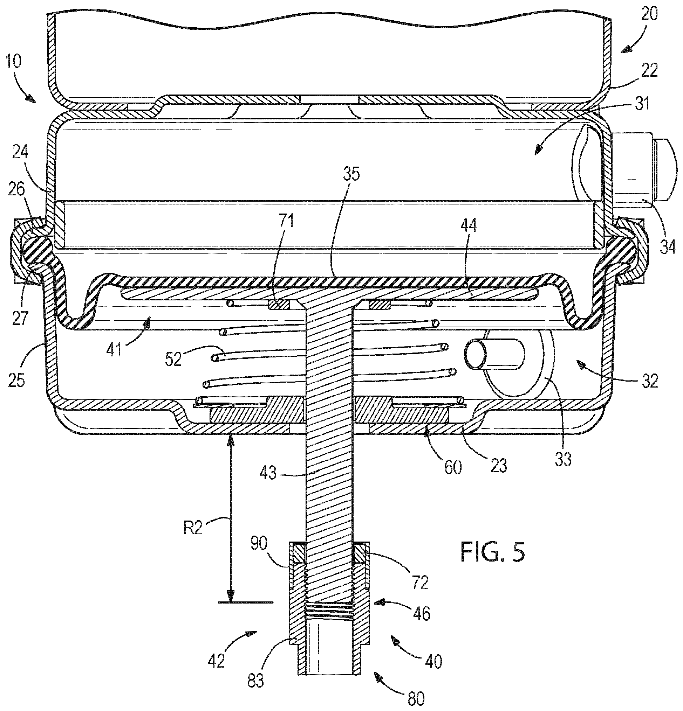

In a non-limiting example, the first distance R1 (Fig. 1) that the rod end 46 extends from the housing 22 is in the range of 0.0-13.00 millimeters (mm). When the rod 43 moves in the second direction (arrow B) out of the second chamber 32 to thereby initially cause the wheel brakes to be applied, the second distance (R2; e.g. see Fig. 2) is in the range of 14.0-20.0 mm. Note that if the spring brake actuator 20 is in the driving state (Fig. 1) and a control system 100 (described further herein) determines (based on the sensed magnetic field strength) that the distance between the rod end 46 and the housing 22 is greater than 14.0-20.0 mm, the control system 100 may further determine and/or alert the operator that the spring brake actuator is inadvertently applying braking to the vehicle (e.g., the spring brake actuator is 'dragging'). As the pedal is further depressed and/or over time as components of the spring brake actuator 20 wear, the second distance (R2; e.g., see Figs. 3-5) between the rod end 46 and the housing 22 as the pedal is depressed may increase and result in a second distance R2 in an 'acceptable' range of 15.0-64.0 mm. Note that when the second distance R2 is within the 'acceptable' range, the spring brake actuator 20 is still considered to be functioning normally and within acceptable operational parameters for applying braking forces. However, once the distance between the rod end 46 and the housing 22 increases past the 'acceptable' range (e.g., to a 'unacceptable' position between the position of the push rod 40 depicted in Fig. 5 and the position of the push rod 40 depicted in Fig. 6) in the range of 64.0-76.0 mm (when the maximum third distance R3 is 73.0 Fig. 6), the spring brake actuator 20 is considered to be 'out of adjustment' and requires servicing or replacement.

Referring to Fig. 9 which depicts an example field-stroke curve when utilizing the two-magnet system 10 of the present disclosure, the sensor 62 advantageously senses greater variations in magnetic field strength during the beginning of the fore stroke and the end of the return stroke. As such, the system 10 accurately determines distinct stroke positions of the rod 43, relative to conventional single-magnet systems, as illustrated by the field-stroke curve 500 depicted in Fig. 8. In the example depicted on Fig. 9, the field-stroke curve 500 is not flat during the beginning of the fore stroke (see zone 503 which schematically depicts the beginning of the fore stroke) to the magnetic field strength sensed by the sensor 62. As such, measurements of stroke logged by the system 10 accurately distinguish distinct stroke positions during the beginning of the fore stroke and the end of the return stroke. Note that while Fig. 9 depicts the upper half of sensed field strength axis 502 exemplarily and schematically being positive field strength (+) and the lower half of the sensed field strength axis 502 exemplarily and schematically being negative field strength (-), this distinction is arbitrary and merely illustrative of relative changes in magnetic field strength sensed by the sensor 62 of the system 10 such that a clearer comparison can be made to magnetic field strength sensed by the sensor 62 of conventional systems (such as the system depicted in Fig. 8).

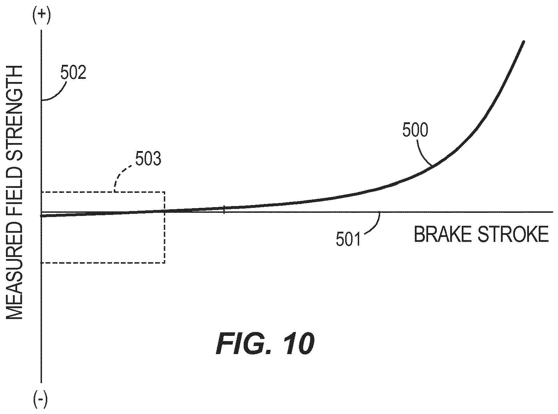

In one example sequence of the fore stroke of the piston rod, the sensor 62 senses the magnetic field strength to be a value of -2.60 when the rod 43 initially moves from the zero stroke position. As the rod 43 is actuated along the fore stroke, the sensor senses: (1) the magnetic field strength to be a value of -1.615 at a stroke of 1.0mm; (2) the magnetic field strength to be a value of -1.329 at a stroke of 2.0mm; (3) the magnetic field strength to be a value of -1.054 at a stroke of 3.0mm; and (4) the magnetic field strength to be a value of -0.793 at a stroke of 4.0mm; (5) the magnetic field strength to be a value of - 0.564 at a stroke of 5.0mm; and (6) the magnetic field strength to be a value of -0.390 at a stroke of 6.0mm. As such, actual stroke of the rod 43 during the beginning of the fore stroke (see zone 503 on Fig. 10) is determined by the system 10 due to the variations in the magnetic field strength sensed by the sensor 62.

Referring now to Fig. 7, an example adapter 80 of the present disclosure is depicted in greater detail. As noted above the adapter 80 couples the second magnet 72 to the rod end 46. The adapter 80 has a sleeve 83 that is generally cylindrical with an open first end 81 and an opposite open second end 82. A bore 86 is defined between the ends 81, 82, and the sleeve 83 has an inner first surface 87 and an opposite outer second surface 88. The rod end 46 of the rod 43 is received into the bore 86 and engages the first surface 87 thereby securing the adapter 80 to the rod end 46. In certain examples, the first surface 87 has threads that engage with threads of the rod end 46. The second end 85 is configured to coupled to a lever arm of a conventional slack adjuster or cam roller (not shown) to thereby translate the reciprocal movement of the push rod 40 to a wheel brake for the vehicle.

An end surface 89 is at the first end 84 of the sleeve 83, and the second magnet 72 coupled to the end surface 89 such that the second magnet 72 is secured to the rod 43. The second magnet 72 can be coupled to the end surface 89 in any suitable manner such as with adhesives, welds, mechanical fasteners, and/or the like.

A shroud 90 encircles the first end 84 of the sleeve 83 and the second magnet 72 to thereby prevent damage to the second magnet 72. The shroud 90 is coupled to the sleeve 83 and/or the second magnet 72 by any suitable means such as adhesives, welds, mechanical fasteners, and/or the like. In certain ax maples, the shroud 90 is integrally formed with the sleeve 83. In certain examples, the shroud 90 is compression fit onto the sleeve 83 and/or the second magnet 72. In certain examples, the shroud 90 holds the second magnet 72 on the end surface 89 of the sleeve 83 by compressing the second magnet 72 against the end surface 89 or having ribs that extend radially to prevent axial movement of the second magnet 72 away from the end surface 89. In certain examples, the end surface 73 of the second magnet 72 lies flush with and makes continuous contact with the end surface 89. This origination of the second magnet 72 relative to the sleeve advantageously increases the magnetic field strength in the direction toward the sensor 62 (Fig. 1). In certain examples, the shroud 90 rests on a lip 95 of the sleeve 83.

The material forming the sleeve 83 can vary, and in certain examples, the sleeve 83 is formed of plastic, metal, alloy, and/or ceramic. In one example, the sleeve 83 is formed of ferromagnetic material having high magnetic permeability. An example of a ferromagnetic material with high magnetic permeability is steel, such as 1008 steel. The present inventors discovered that forming the sleeve 83 from ferromagnetic material with high magnetic permeability advantageously focuses the magnetic field toward the sensor 62 and/or enhances the magnetic field strength of the second magnet 72. As such, the changes to magnetic field strength sensed by the sensor 62 as the rod 43 reciprocates are more apparent. In certain examples, the sleeve 83 is preferably formed of highly-ferromagnetic material with high magnetic permeability such as steel (e.g., 1008 steel), to thereby maximize enhancement of the magnetic field of the second magnet 72 such that the changes to the magnetic field strength sensed by the sensor 62 as the rod 43 reciprocates is more apparent. In certain examples, the sleeve 83 is formed with a material with magnetic permeability in the range of 200,000.00 to 100.0 relative permeability (µr). In other examples, the sleeve 83 is formed with a material with magnetic permeability in the range of 200,000.00 to 4000.00 µr. In other examples, the sleeve 83 is formed with a material with magnetic permeability in the range of 5000.00 to 100.00 µr.

Similarly, the material forming the shroud 90 can vary, and in certain examples, the shroud 90 is formed by plastic, metal, alloy, and/or ceramic. In one example, the shroud 90 is formed by non- ferromagnetic materials such as aluminum, glass-filled nylon, and carbon fiber. Note that in certain examples, non-ferromagnetic materials are non-magnetic and/or contain no iron. In another example, the shroud 90 is formed of weak-ferromagnetic materials having relatively low magnetic permeability. In certain non-limiting examples, weak-ferromagnetic materials having relatively low magnetic permeability include stainless steel such as stainless steel 304 and stainless steel 410. In certain examples, the shroud 90 is formed with a material with magnetic permeability in the range of 100.0 to 1.0 µr. The present inventors discovered that form the shroud 90 with non- or low ferromagnetic materials with no or low magnetic permeability advantageously does not or minimally disrupt or mask the magnetic field of the second magnet 72. As such, the changes to magnetic field strength sensed by the sensor 62 as the rod 43 reciprocates are more apparent. In certain examples, the shroud 90 preferably comprises weak-ferromagnetic or non-ferromagnetic material such as stainless steel 304, stainless steel 410, and aluminum 6061.

In certain examples, the present inventors observed that forming both the sleeve 83 and the shroud 90 of ferromagnetic materials disadvantageously reduces the magnetic field of the second magnet 72 and thereby reduces the effect of the second magnet 72 on the sensor 62 and the collective magnetic field strength sensed by the sensor 62. For illustrative purposes, Fig. 10 depicts the field-stroke curve 500 of the system 10 of the present disclosure when both the sleeve 83 and the shroud 90 are formed of ferromagnetic materials. In this example, the sensor 62 only minimally senses changes to magnetic field strength caused by the magnets 71, 72 and as such, the field-stroke curve 500 is flatter during the beginning of the fore stroke (see zone 503) than the field-stroke curve 500 depicted in Fig. 9, albeit not as flat at the field-stroke curve 500 depicted in Fig. 8. As such, while the above-noted composition of the sleeve 83 and the shroud 90 does slightly improve the ability of the system 10 to sense changes in the magnetic field strength of the magnets 71, 72, relative to a conventional single-magnet system (see Fig. 8), the changes to the magnetic field strength are not as apparent to the sensor 62 when the shroud 90 is preferably formed of ferromagnetic material and the shroud 90 is formed with non-ferromagnetic material (as exemplarily noted above).

As described above, the example systems 10 of the present disclose sure are capable of sensing changes in the magnetic field strength accurately during the beginning of the fore stroke and end of the return stroke of the rod 43. This accuracy is important for determining problems with the spring brake actuator 20 during this these areas of anticipated movement of the rod 43. When the spring brake actuator 20 is in the driving state (Fig. 9), the rod 43 is normally and preferably is in a zero stroke position such that the rod 43 is not causing braking forces are not applied to the vehicle. It is possible, however, that while the driving state (Fig. 9) rod 43 does cause braking forces to be applied to the vehicle (commonly called 'dragging') due to wear of the components of the spring brake actuator 20 or other problems. If the spring brake actuator is in fact dragging, the vehicle and/or the spring brake actuator 20 should be taken out of service for repair or replacement. The system 10 of the present disclosure is capable of sensing changes to the magnetic field strength while the push rod is near the zero stroke position including during the beginning of the fore stroke and the end of the return stroke.

Note that problems with the spring brake actuator 20 normally do not occur when the rod 43 is in the middle of the stroke (e.g., stoke positions between the beginning of the fore stroke / end of the fore stroke and the end of the fore stroke / beginning of the return stroke). As such, in the event that the changes of the magnetic field strength in the middle of the stroke are not or minimally sensed by the sensor 62 (see zone 504 of Fig. 9 schematically corresponding to the magnetic field strength in the middle of the stroke on the example field-stroke curve 500), the system 10 does loss its ability to determine problems with the spring brake actuator 20 at the ends/beginnings of the fore and return strokes.

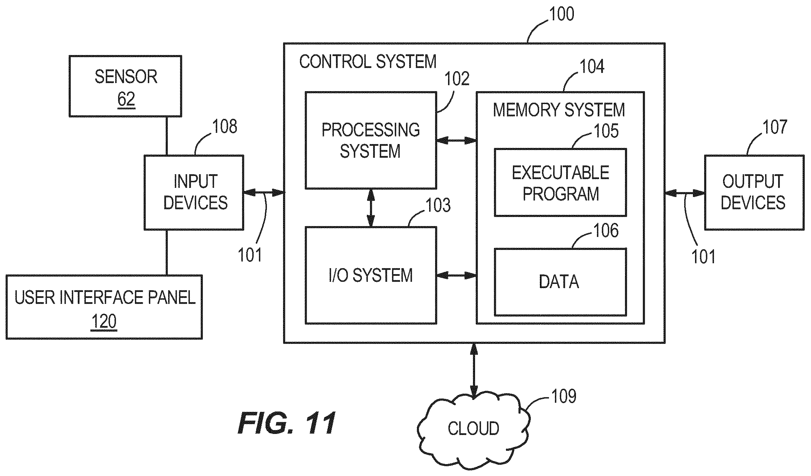

Referring now to Fig. 11, an example control system 100 of the present disclosure is depicted. The control system 100 determines the stroke position of the rod 43 (Fig. 1) based on signals from the sensor 62 that correspond to the sensed magnetic field strength of the system 10. The control system 100 can also determine if the rod 43 is dragging on the vehicle and/or if the push rod 34 has exceeded a maximum stroke and further alert the operator of the vehicle to inspect and/or replace the spring brake actuator 20 or other brake components (Fig. 1). The control system 100 can also be configured to report different determinations to the operator including dragging of the spring brake actuator 20, non-functioning service brake, non-functioning parking brake, overstroke of the push rod 40, slow brake actuation, slow brake release, same-axle stroke imbalance, same-axle brake actuator mismatch, no signal, and/or sensor error. In certain examples, the control system 100 determines an overstroke condition by comparing the sensed stroke against a predetermined maximum allowable stroke. In certain examples, the control system 100 determines application of braking forces to the vehicle by the spring brake actuator 20 by comparing the active stroke during a known brake application (determined by activation of the brake light and/or sensed brake air pressure) to determine if the braking stroke application value exceeds an engagement threshold. In certain examples, the control system 100 determines a same-axle stroke imbalance by comparing the maximum stroke for spring brake actuators 20 associated with an axle of the vehicle. The control system 100 alerts the operator or generates a log data if the difference between the maximum strokes exceeds a predetermined threshold value which may be indicative of improper wear of one or both of the spring brake actuators 20. In certain examples, the control system 100 determines a 'slow release' of the push rod 40 of the spring brake actuator 20 when a brake release command has been issued (e.g., brake light or brake pressure) and a determined moment of the push rod 40 is below a predetermined time engagement threshold. If the time difference exceeds a predetermined time value, a 'slow release' is indicated. Note that the control system 100 can be positioned remote from the spring brake actuator 20 (such as on the vehicle) and/or include the control system included with certain example sensor assemblies 60 (as noted above).

Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In certain examples, the control system 100 communicates with each of the one or more components of the system 10 via a communication link 101, which can be any wired or wireless link. The control system 100 is capable of receiving information and/or controlling one or more operational characteristics of the system 10 and its various sub-systems by sending and receiving control signals via the communication links 101. In one example, the communication link 101 is a controller area network (CAN) bus; however, other types of links could be used. It will be recognized that the extent of connections and the communication links 101 may in fact be one or more shared connections, or links, among some or all of the components in the system 10. Moreover, the communication link 101 lines are meant only to demonstrate that the various control elements are capable of communicating with one another, and do not represent actual wiring connections between the various elements, nor do they represent the only paths of communication between the elements. Additionally, the system 10 may incorporate various types of communication devices and systems, and thus the illustrated communication links 101 may in fact represent various different types of wireless and/or wired data communication systems.

The control system 100 may be a computing system that includes a processing system 102, memory system 104, and input/output (I/O) system 103 for communicating with other devices, such as input devices 108 (e.g., user interface panel 120, the sensor 62, an accelerometer, ) and output devices 107 (e.g., user interface panel 120 may also be utilized as an output device), either of which may also or alternatively be stored in a cloud 109. The processing system 102 loads and executes an executable program 105 from the memory system 104, accesses data 106 stored within the memory system 104, and directs the system 10 to operate as described in further detail below.

The processing system 102 may be implemented as a single microprocessor or other circuitry, or be distributed across multiple processing devices or sub-systems that cooperate to execute the executable program 105 from the memory system 104. Non-limiting examples of the processing system include general purpose central processing units, application specific processors, and logic devices.

The memory system 104 may comprise any storage media readable by the processing system 102 and capable of storing the executable program 105 and/or data 106. The memory system 104 may be implemented as a single storage device, or be distributed across multiple storage devices or sub-systems that cooperate to store computer readable instructions, data structures, program modules, or other data. The memory system 104 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

In certain examples, the control system 100 records calibration data related to the spring brake actuator 20 on the memory system 104. During the manufacturing process of the spring brake actuator 20 according to the present disclosure, the sensor 62 is calibrated to thereby associate a given magnetic field strength with one or more actual stroke positions of the rod 43. For example, the rod 43 is placed into the zero stroke position (see Fig. 1) and the sensor 62 senses the corresponding magnetic field strength. The sensor 62 then outputs a signal corresponding first threshold magnetic field strength to the control system 100. The control system 100 stores this first magnetic field strength value on the memory system 104. The rod 43 is then placed into a maximum stroke position (see Fig. 6) and the sensor 62 senses the corresponding magnetic field strength. The sensor 62 then outputs a signal corresponding second threshold magnetic field strength to the control system 100 which is also stored on the memory system 104. As such, calibration data corresponding to the magnetic field strength while the rod 43 is at determined outer extents are defined for the specific spring brake actuator 20 being calibrated.

With the calibration data stored to the memory system 104, the control system 100 can determine the actual stoke position of the rod 43 during operation based on additional signals from the sensor 62. For instance, if the sensor 62 senses the magnetic field strength to be equal to or within an acceptable range of the first threshold magnetic field strength, the control system 100 will determine that the rod 43 is at the zero stoke position. In another instance, if the sensor 62 senses the magnetic field strength that is greater than the second threshold magnetic field strength, the control system 100 will determine that the rod 43 has exceeded the maximum stroke alert the operator to inspect or replace the spring brake actuator 20. In certain examples, the control system 100 may apply one or more algorithms stored on the memory system 104 to the signals and/or corresponding values received from the sensor 62 to determine the stroke of the rod 43. In certain examples, the control system 100 compares the signals and/or corresponding values received from the sensor 62 to data on the memory system 104, for example a look-up table, which correlates the sensed magnetic field strengths or sensed change to the magnetic field strength to a specific stroke of the rod 43. Note that in certain examples, the sensor 62 is configured to compensate and/or adjust the signals corresponding to the sensed magnetic field strength value based on a sensed temperature. In certain examples, the control system 100 is further configured to receive signals from a brake light circuit sensor such that the control system 100 determines if the operator is actively depressing the brake pedal. Whether or not the operator is actively depressing the brake pedal may be considered by the control system 100 when determining the stroke position of the rod 43 and/or further determinations such as dragging of the brake or damaged sensor 62.

In certain examples, the control system 100 is configured to record and store or log the data received from the sensor 62. For instance, when the data corresponding to the sensed magnetic field strength is received from the sensor 62, the control system 100 records a timestamp, which can comprise a date and a time, when the data is received. As such, a fleet manager can access this data log to observe operation and wear of the spring brake actuator 20. Furthermore, the data log may provide a method for determining if the spring brake actuator 20 has been properly cared for and inspected. In certain examples, the control system 100 includes an electronic control unit (ECU).

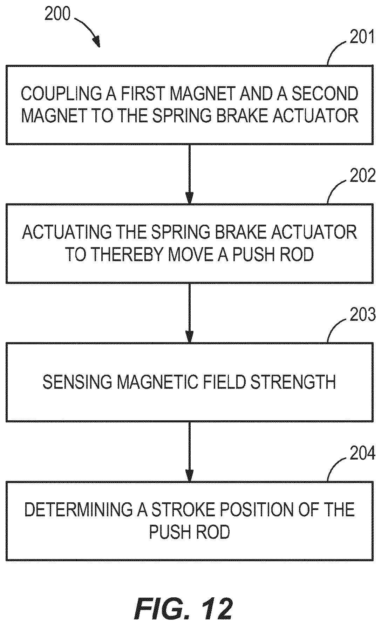

Fig. 12 depicts an example control method 200 for operating an example system 10 described above. The example method included includes at step 201 in providing the rod 43 with the first magnet 71 and the second magnet 72 coupled thereto such that the spring brake actuator 20 has a magnetic field. At step 202, the spring brake actuator 20 is actuated such that the rod 43 is moved. The sensor 62, at step 203, senses the magnetic field strength at the rod 43 and outputs a corresponding signal to the control system 100. At step 204, the control system determines the stroke position of the rod 43.

In certain examples, a system for monitoring stroke of a spring brake actuator of a vehicle comprises a spring brake actuator having a push rod, wherein pneumatic activation of the spring brake actuator causes the push rod to further extend out of the spring brake actuator to thereby activate braking of the vehicle, and wherein pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense changes in a magnetic field created by the first magnet and the second magnet, and a controller is configured to determine stroke of the push rod based upon the changes in magnetic field.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and further comprising a shroud that rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a spring brake actuator for braking a wheel of a vehicle comprises a first chamber, a second chamber, and a push rod extending from the second chamber, wherein pneumatic activation of the spring brake actuator causes the push rod to further extend out of the second chamber to thereby activate braking of the wheel of the vehicle, and wherein pneumatic deactivation of the spring brake actuator causes the push rod to retract back into the second chamber to thereby deactivate braking of the wheel of the vehicle. A first magnet is coupled to the push rod and a second magnet is also coupled to the push rod, the second magnet being spaced apart from the first magnet. A sensor is configured to sense changes in a magnetic field created by the first magnet and the second magnet. A controller is configured to determine stroke of the push rod based on changes in the magnetic field.

Optionally, the first magnet is fixed relative to the second magnet such that as the push rod moves, distance between the first magnet and the second magnet remains constant. Optionally, the spring brake actuator has a chamber from which the push rod extends, and wherein the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and a shroud rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a system for monitoring stroke of a spring brake actuator of a vehicle includes a spring brake actuator having a push rod such that pneumatic activation of the spring brake actuator causes the push rod to further extend out of the spring brake actuator to thereby activate braking of the vehicle and pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense a magnetic field created by the first magnet and the second magnet, and a controller is configured to determine stroke of the push rod based upon the magnetic field.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and further comprising a shroud that rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a system for monitoring stroke of a spring brake actuator of a vehicle includes a spring brake actuator having a push rod such that pneumatic activation of the spring brake actuator causes the push rod to further extend out of the spring brake actuator to thereby activate braking of the vehicle and pneumatic deactivation of the spring brake actuator causes the push rod to retract back into the spring brake actuator to thereby deactivate braking of the vehicle. A first magnet and a second magnet are coupled to the push rod, and the second magnet is spaced apart from the first magnet. A sensor is configured to sense a magnetic field created by the first magnet and the second magnet, and a controller configured to determine stroke of the push rod based upon the magnetic field.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the sleeve comprises a ferromagnetic material. Optionally, the sleeve has a lip and further comprising a shroud that rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, spring brake actuator for braking a wheel of a vehicle includes a first chamber, a second chamber, and a push rod extending from the second chamber such that pneumatic activation of the spring brake actuator causes the push rod to further extend out of the second chamber to thereby activate braking of the wheel of the vehicle and pneumatic deactivation of the spring brake actuator causes the push rod to retract back into the second chamber to thereby deactivate braking of the wheel of the vehicle. A first magnet is coupled to the push rod, a second magnet coupled to the push rod, and the second magnet is spaced apart from the first magnet. A sensor configured to sense a magnetic field created by the first magnet and the second magnet, and a controller configured to determine stroke of the push rod based on the magnetic field.

Optionally, the first magnet is fixed relative to the second magnet such that as the push rod moves, distance between the first magnet and the second magnet remains constant. Optionally, the spring brake actuator has a chamber from which the push rod extends, and wherein the first magnet is positioned in the chamber and the second magnet is positioned exterior of the chamber. Optionally, the second magnet is coupled to a rod end of the push rod. Optionally, a shroud is on the second magnet. Optionally, the shroud comprises a non-ferromagnetic material. Optionally, a sleeve couples the second magnet to the push rod. Optionally, the comprises a ferromagnetic material. Optionally, the sleeve has a lip and a shroud rests on the lip to thereby protect the second magnet. Optionally, the sleeve has an end surface, and an end surface of the second magnet lies flush against the end surface of the sleeve. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

In certain examples, a method for monitoring stroke of a spring brake actuator includes coupling a first magnet and a second magnet to a push rod of the spring brake actuator; actuating the spring brake actuator to thereby move the push rod; sensing magnetic field created by the first magnet and the second magnet as the push rod is moved; and determining stroke of the push rod.

Optionally, the first magnet is fixed relative to the second magnet such that as the push rod moves, distance between the first magnet and the second magnet remains constant. Optionally, the spring brake actuator has a chamber from which the push rod extends, and the first magnet is positioned in the chamber and the second magnet is positioned exterior of the chamber. Optionally, the coupling the second magnet to the push rod includes using a sleeve to couple the second magnet to the push rod. Optionally, the sleeve comprises a ferromagnetic material. Optionally, the sleeve comprises a material having a high magnetic permeability. Optionally, the material comprising the sleeve has a magnetic permeability in the range of 200,000.00 to 100.0 relative permeability. Optionally, the material comprising the shroud has a magnetic permeability in the range of 100.0 to 1.0 relative permeability.

Citations to a number of references are made herein. In the event that there is an inconsistency between a definition of a term in the specification as compared to a definition of the term in a cited reference, the term should be interpreted based on the definition in the specification.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

The following clauses set out features of the invention which may not be presently claimed but which may form the basis for amendments or future divisional applications.

### CLAUSES

1. A system for monitoring stroke of a spring brake actuator of a vehicle, the system comprising:
   a spring brake actuator having a push rod, wherein pneumatic activation of the spring brake actuator causes the push rod to further extend out of the spring brake actuator to thereby activate braking of the vehicle, and wherein pneumatic deactivation of the spring brake actuator causes the push rod to retract back into the spring brake actuator to thereby deactivate braking of the vehicle;
   a first magnet and a second magnet coupled to the push rod, the second magnet spaced apart from the first magnet;
   a sensor configured to sense a magnetic field created by the first magnet and the second magnet; and
   a controller configured to determine stroke of the push rod based upon the magnetic field.
2. The system according to clause 1, wherein the first magnet is fixed relative to the second magnet such that as the push rod moves, distance between the first magnet and the second magnet remains constant.
3. The system according to clause 1, wherein the spring brake actuator has a chamber from which the push rod extends, and wherein the first magnet is positioned in the chamber and the second magnet is positioned exterior of the chamber.
4. The system according to clause 1, wherein the second magnet is coupled to a rod end of the push rod.
5. The system according to clause 1, further comprising a shroud on the second magnet.
6. The system according to clause 5, wherein the shroud comprises a non-ferromagnetic material.
7. The system according to clause 1, further comprising a sleeve that couples the second magnet to the push rod.
8. The system according to clause 7, wherein the sleeve comprises a ferromagnetic material.
9. The system according to clause 7, wherein the sleeve has a lip and further comprising a shroud that rests on the lip to thereby protect the second magnet.
10. The system according to clause 7, wherein the sleeve has an end surface, and wherein an end surface of the second magnet lies flush against the end surface of the sleeve.
11. A spring brake actuator for braking a wheel of a vehicle, the spring brake actuator comprising:
   a first chamber;
   a second chamber;
   a push rod extending from the second chamber, wherein pneumatic activation of the spring brake actuator causes the push rod to further extend out of the second chamber to thereby activate braking of the wheel of the vehicle, and wherein pneumatic deactivation of the spring brake actuator causes the push rod to retract back into the second chamber to thereby deactivate braking of the wheel of the vehicle;
   a first magnet coupled to the push rod;
   a second magnet coupled to the push rod, the second magnet being spaced apart from the first magnet;
   a sensor configured to sense a magnetic field created by the first magnet and the second magnet; and
   a controller configured to determine stroke of the push rod based on the magnetic field.
12. The spring brake actuator according to clause 11, wherein the first magnet is fixed relative to the second magnet such that as the push rod moves, distance between the first magnet and the second magnet remains constant.
13. The spring brake actuator according to clause 11, wherein the spring brake actuator has a chamber from which the push rod extends, and wherein the first magnet is positioned in the chamber and the second magnet is positioned exterior of the chamber.
14. The spring brake actuator according to clause 11, wherein the second magnet is coupled to a rod end of the push rod.
15. The spring brake actuator according to clause 11, further comprising a shroud on the second magnet.
16. The spring brake actuator according to clause 15, wherein the shroud comprises a non-ferromagnetic material.
17. The spring brake actuator according to clause 11, further comprising a sleeve that couples the second magnet to the push rod.
18. The spring brake actuator according to clause 17, wherein the sleeve comprises a ferromagnetic material.
19. The spring brake actuator according to clause 17, wherein the sleeve has a lip and further comprising a shroud that rests on the lip to thereby protect the second magnet.
20. The spring brake actuator according to clause 17, wherein the sleeve has an end surface, and wherein an end surface of the second magnet lies flush against the end surface of the sleeve.
21. A method for monitoring stroke of a spring brake actuator, the method comprising:
   coupling a first magnet and a second magnet to a push rod of the spring brake actuator;
   actuating the spring brake actuator to thereby move the push rod;
   sensing magnetic field created by the first magnet and the second magnet as the push rod is moved; and
   determining a stroke of the push rod.
22. The method according to clause 21, wherein the first magnet is fixed relative to the second magnet such that as the push rod moves, distance between the first magnet and the second magnet remains constant.
23. The method according to clause 21, wherein the spring brake actuator has a chamber from which the push rod extends, and wherein the first magnet is positioned in the chamber and the second magnet is positioned exterior of the chamber.
24. The method according to clause 21, wherein the coupling the second magnet to the push rod includes using a sleeve to couple the second magnet to the push rod.
25. The method according to clause 24, wherein the sleeve comprises a ferromagnetic material.

## Claims

1. A system for monitoring stroke of a spring brake actuator of a vehicle, the system comprising:
- a spring brake actuator having a push rod, wherein pneumatic activation of the spring brake actuator causes the push rod to further extend out of the spring brake actuator to thereby activate braking of the vehicle, and wherein pneumatic deactivation of the spring brake actuator causes the push rod to retract back into the spring brake actuator to thereby deactivate braking of the vehicle;
- a first magnet and a second magnet coupled to the push rod, the second magnet spaced apart from the first magnet;
- a sensor configured to sense a magnetic field strength created by the first magnet and the second magnet; and
- a controller configured to determine stroke of the push rod based upon the magnetic field strength.

2. The system according to claim 1, wherein the first magnet is fixed relative to the second magnet such that as the push rod moves, distance between the first magnet and the second magnet remains constant.

3. The system according to any one of the preceding claims, wherein the second magnet is coupled to a rod end of the push rod.

4. The system according to any one of the preceding claims, further comprising a shroud on the second magnet.

5. The system according to claim 4, wherein the shroud comprises a non-ferromagnetic material.

6. The system according to any one of the preceding claims, further comprising a sleeve that couples the second magnet to the push rod.

7. The system according to claim 6, wherein the sleeve comprises a ferromagnetic material and wherein the sleeve optionally has a lip and further comprising a shroud that rests on the lip to thereby protect the second magnet.

8. The system according to claim 7, wherein the sleeve has an end surface, and wherein an end surface of the second magnet lies flush against the end surface of the sleeve.

9. The system according to any one of the preceding claims, wherein the spring brake actuator has a chamber from which the push rod extends, and wherein the first magnet is positioned in the chamber and the second magnet is positioned exterior of the chamber.

10. The system according any one of the preceding claims, wherein the system comprises.
- a first chamber; and
- a second chamber, and where the push rod extends from the second chamber, wherein pneumatic activation of the spring brake actuator causes the push rod to further extend out of the second chamber to thereby activate braking of the wheel of the vehicle, and wherein pneumatic deactivation of the spring brake actuator causes the push rod to retract back into the second chamber to thereby deactivate braking of the wheel of the vehicle.

11. A method for monitoring stroke of a spring brake actuator, the method comprising the steps of:
- coupling a first magnet and a second magnet to a push rod of the spring brake actuator, the second magnet spaced apart from the first magnet;
- actuating the spring brake actuator to thereby move the push rod;
- sensing magnetic field strength created by the first magnet and the second magnet as the push rod is moved; and
- determining a stroke of the push rod based on the sensed field strength.

12. The method according to claim 11, wherein the first magnet is fixed relative to the second magnet such that as the push rod moves, distance between the first magnet and the second magnet remains constant.

13. The method according to claim 11 or 12, wherein the spring brake actuator has a chamber from which the push rod extends, and wherein the first magnet is positioned in the chamber and the second magnet is positioned exterior of the chamber.

14. The method according to any one of the claims 11-13, wherein the coupling the second magnet to the push rod includes using a sleeve to couple the second magnet to the push rod.

15. The method according to claim 14, wherein the sleeve comprises a ferromagnetic material.

## Patentansprüche

1. System zur Überwachung des Hubs eines Federbremsaktuators eines Fahrzeugs, wobei das System Folgendes umfasst:
- einen Federbremsaktuator, der eine Schubstange aufweist, wobei pneumatische Aktivierung des Federbremsaktuators bewirkt, dass sich die Schubstange weiter aus dem Federbremsaktuator heraus erstreckt, um dadurch Bremsen des Fahrzeugs zu aktivieren, und wobei pneumatische Deaktivierung des Federbremsaktuators bewirkt, dass sich die Schubstange in den Federbremsaktuator zurückzieht, um dadurch Bremsen des Fahrzeugs zu deaktivieren;
- einen ersten Magneten und einen zweiten Magneten, der mit der Schubstange gekoppelt ist, wobei der zweite Magnet vom ersten Magneten beabstandet ist;
- einen Sensor, der so konfiguriert ist, dass er eine vom ersten Magneten und zweiten Magneten erzeugte Magnetfeldstärke erfasst; und
- eine Steuereinheit, die so konfiguriert ist, dass sie basierend auf der Magnetfeldstärke Hub der Schubstange bestimmt.

2. System nach Anspruch 1, wobei der erste Magnet in Bezug auf den zweiten Magneten so fixiert ist, dass bei Bewegung der Schubstange der Abstand zwischen dem ersten Magneten und dem zweiten Magnet konstant bleibt.

3. System nach einem der vorstehenden Ansprüche, wobei der zweite Magnet mit einem Stangenende der Schubstange gekoppelt ist.

4. System nach einem der vorstehenden Ansprüche, weiter umfassend eine Ummantelung auf dem zweiten Magneten.

5. System nach Anspruch 4, wobei die Ummantelung ein nicht ferromagnetisches Material umfasst.

6. System nach einem der vorstehenden Ansprüche, weiter umfassend eine Muffe, die den zweiten Magneten mit der Schubstange koppelt.

7. System nach Anspruch 6, wobei die Muffe ein ferromagnetisches Material umfasst, und wobei die Muffe optional eine Lippe aufweist und weiter eine Ummantelung umfasst, die auf der Lippe ruht, um dadurch den zweiten Magneten zu schützen.

8. System nach Anspruch 7, wobei die Muffe eine Endoberfläche aufweist, und wobei eine Endoberfläche des zweiten Magneten bündig an der Endoberfläche der Muffe anliegt.

9. System nach einem der vorstehenden Ansprüche, wobei der Federbremsaktuator eine Kammer aufweist, von der sich die Schubstange erstreckt, und wobei der erste Magnet in der Kammer positioniert ist und der zweite Magnet außerhalb der Kammer positioniert ist.

10. System nach einem der vorstehenden Ansprüche, wobei das System Folgendes umfasst:
- eine erste Kammer; und
- eine zweite Kammer, und wobei sich die Schubstange von der zweiten Kammer erstreckt, wobei pneumatische Aktivierung des Federbremsaktuators bewirkt, dass sich die Schubstange weiter aus der zweiten Kammer erstreckt, um dadurch Bremsen des Rads des Fahrzeugs zu aktivieren, und wobei pneumatische Deaktivierung des Federbremsaktuators bewirkt, dass sich die Schubstange in die zweite Kammer zurückzieht, um dadurch Bremsen des Rads des Fahrzeugs zu deaktivieren.

11. Verfahren zur Überwachung des Hubs eines Federbremsaktuators, wobei das Verfahren folgende Schritte umfasst:
- Koppeln eines ersten Magneten und eines zweiten Magneten mit einer Schubstange des Federbremsaktuators, wobei der zweite Magnet vom ersten Magneten beabstandet ist;
- Betätigen des Federbremsaktuators, um dadurch die Schubstange zu bewegen;
- Erfassen einer vom ersten Magneten und zweiten Magneten erzeugte Magnetfeldstärke, während die Schubstange bewegt wird; und
- Bestimmen eines Hubs der Schubstange basierend auf der erfassten Feldstärke.

12. Verfahren nach Anspruch 11, wobei der erste Magnet in Bezug auf den zweiten Magneten so fixiert ist, dass während Bewegung der Schubstange der Abstand zwischen dem ersten Magneten und dem zweiten Magnet konstant bleibt.

13. Verfahren nach Anspruch 11 oder 12, wobei der Federbremsaktuator eine Kammer aufweist, von sich die Schubstange erstreckt, und wobei der erste Magnet in der Kammer positioniert ist und der zweite Magnet außerhalb der Kammer positioniert ist.

14. Verfahren nach einem der Ansprüche 11-13, wobei das Koppeln des zweiten Magneten mit der Schubstange Verwenden einer Muffe zum Koppeln des zweiten Magneten mit der Schubstange einschließt.

15. Verfahren nach Anspruch 14, wobei die Muffe ein ferromagnetisches Material umfasst.

## Revendications

1. Système de surveillance de course d'actionneur de frein à ressort de véhicule, le système comprenant :
- un actionneur de frein à ressort présentant une tige poussoir, dans lequel une activation pneumatique de l'actionneur de frein à ressort amène la tige poussoir à s'étendre davantage en dehors de l'actionneur de frein à ressort pour activer ainsi un freinage du véhicule, et dans lequel une désactivation pneumatique de l'actionneur de frein à ressort amène la tige poussoir à se rétracter dans l'actionneur de frein à ressort pour désactiver ainsi le freinage du véhicule ;
- un premier aimant et un second aimant couplés à la tige poussoir, le second aimant étant espacé du premier aimant ;
- un détecteur configuré pour détecter une force de champ magnétique créée par le premier aimant et le second aimant ; et
- un dispositif de commande configuré pour déterminer la course de la tige poussoir sur la base de la force de champ magnétique.

2. Système selon la revendication 1, dans lequel le premier aimant est fixe par rapport au second aimant de sorte que lorsque la tige poussoir se déplace, la distance entre le premier aimant et le second aimant reste constante.

3. Système selon l'une quelconque des revendications précédentes, dans lequel le second aimant est couplé à une extrémité de tige de la tige poussoir.

4. Système selon l'une quelconque des revendications précédentes, comprenant en outre une enveloppe sur le second aimant.

5. Système selon la revendication 4, dans lequel l'enveloppe comprend un matériau non ferromagnétique.

6. Système selon l'une quelconque des revendications précédentes, comprenant en outre un manchon qui couple le second aimant à la tige poussoir.

7. Système selon la revendication 6, dans lequel le manchon comprend un matériau ferromagnétique et dans lequel le manchon présente facultativement une lèvre et comprenant en outre une enveloppe qui repose sur la lèvre pour protéger ainsi le second aimant.

8. Système selon la revendication 7, dans lequel le manchon présente une surface d'extrémité, et dans lequel une surface d'extrémité du second aimant se trouve à fleur contre la surface d'extrémité du manchon.

9. Système selon l'une quelconque des revendications précédentes, dans lequel l'actionneur de frein à ressort présente une chambre depuis laquelle la tige poussoir s'étend, et dans lequel le premier aimant est positionné dans la chambre et le second aimant est positionné à l'extérieur de la chambre.

10. Système selon l'une quelconque des revendications précédentes, dans lequel le système comprend :
- une première chambre ; et
- une seconde chambre, et où la tige poussoir s'étend à partir de la seconde chambre, dans lequel une activation pneumatique de l'actionneur de frein à ressort amène la tige poussoir à s'étendre davantage en dehors de la seconde chambre pour activer ainsi un freinage de la roue du véhicule, et dans lequel une désactivation pneumatique de l'actionneur de frein à ressort amène la tige poussoir à se rétracter dans la seconde chambre pour désactiver ainsi le freinage de la roue du véhicule.

11. Procédé de surveillance de course d'actionneur de frein à ressort, le procédé comprenant les étapes consistant à :
- coupler un premier aimant et un second aimant à une tige poussoir de l'actionneur de frein à ressort, le second aimant étant espacé du premier aimant ;
- actionner l'actionneur de frein à ressort pour déplacer ainsi la tige poussoir ;
- détecter une force de champ magnétique créée par le premier aimant et le second aimant lorsque la tige poussoir est déplacée ; et
- déterminer une course de la tige poussoir sur la base de la force de champ détectée.

12. Procédé selon la revendication 11, dans lequel le premier aimant est fixe par rapport au second aimant de sorte que lorsque la tige poussoir se déplace, la distance entre le premier aimant et le second aimant reste constante.

13. Procédé selon la revendication 11 ou la revendication 12, dans lequel l'actionneur de frein à ressort présente une chambre depuis laquelle la tige poussoir s'étend, et dans lequel le premier aimant est positionné dans la chambre et le second aimant est positionné à l'extérieur de la chambre.

14. Procédé selon l'une quelconque des revendications 11 à 13, dans lequel le couplage du second aimant à la tige poussoir inclut l'utilisation d'un manchon pour coupler le second aimant à la tige poussoir.

15. Procédé selon la revendication 14, dans lequel le manchon comprend un matériau ferromagnétique.
